# EUROPÄISCHE PATENTANMELDUNG

(11) **EP 2 852 032 A1**
(43) Veröffentlichungstag der Anmeldung: **25.03.2015**
(21) Anmeldenummer: 13185766.6
(22) Anmeldetag: 24.09.2013
(51) Int. Cl.: H02K 3/24, H02K 3/34

(54) **Rotor für eine dynamoelektrische Maschine**

(71) Anmelder: Siemens Aktiengesellschaft, 80333 München (DE)
(72) Erfinder: Krompasky, Erik, 13583 Berlin-Spandau (DE); Simek, Josef, Prag (CZ); Tucek, Martin, Prag (CZ)
(74) Vertreter: Maier, Daniel Oliver

(57) **Zusammenfassung**

Die Erfindung betrifft einen Rotor für eine dynamoelektrische Maschine, in dessen zylindrischem Läuferkörper (1) eine Vielzahl von Längsnuten (12) verläuft, in welchen eine Erregerwicklung angeordnet ist, wobei pro Längsnut (12) mehrere Leiter (4, 9) übereinander in unterschiedlichen Leiterebenen angeordnet sind.

Um die Herstellung der Kühlkanäle weniger aufwändig zu gestalten, ist vorgesehen, dass die Erregerwicklung aus isolierten Leitern (9) besteht, wobei in jeder Längsnut (12) pro Leiterebene zumindest zwei Leiter (9) parallel nebeneinander und mit einem Abstand zueinander angeordnet sind, sodass mehrere übereinander angeordnete Leiterpaare zumindest einen radial verlaufenden Kühlkanal (14) bilden.

## Beschreibung

### Technisches Gebiet

Die Erfindung betrifft einen Rotor für eine dynamoelektrische Maschine, in dessen zylindrischem Läuferkörper eine Vielzahl von Längsnuten verläuft, in welchen eine Erregerwicklung angeordnet ist, wobei pro Längsnut mehrere Leiter übereinander in unterschiedlichen Leiterebenen angeordnet sind.

Der erfindungsgemäße Rotor kann insbesondere für große zweipolige Synchronmaschinen verwendet werden, wo die als Spulen ausgebildete Erregerwicklung in gefräste Längsnuten des Läuferkörpers eingelegt werden. Die Spulen sind dabei in der Regel aus massiven Kupferleitern gefertigt. Die Leiter müssen gegeneinander und gegen die Nuteisen isoliert sein. Gleichzeitig muss eine gute Wärmeableitung für die Leiter der Erregerwicklung gewährleistet sein.

### Stand der Technik

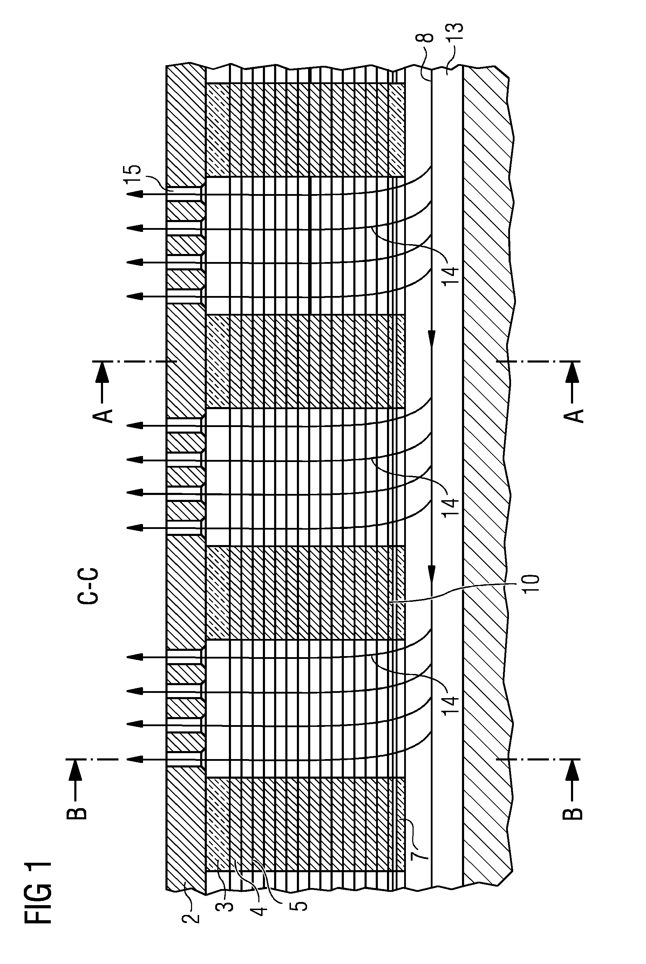

Bisher wurde die Erregerwicklung meist aus blanken Leitern 4 ohne Isolierung erzeugt, wie dies in Fig. 1 dargestellt ist. Die Isolation zwischen den Leitern 4 (in radialer Richtung) wird mit Einlagen aus Isolationsstoff, sogenannten Isolationseinlagen 5, hergestellt. Die Hauptisolation 6 gegen das Nuteisen bilden Nutkästen aus Isolationsstoff.

Die Kühlung der Erregerwicklung wird in der Regel mit Kühlluft 8 erreicht. Die Kühlluft 8 strömt durch axiale Kanäle in den Rotor und durch davon abzweigende radiale Kanäle, die sich durch die Längsnuten 12 fortsetzen, zu den Leitern 4. Diese weisen Löcher auf, sodass sich durch die Löcher in übereinander angeordneten Leitern die radialen Kanäle fortsetzen. Auch in den Isolationseinlagen 5 und in den Keilen 2, welche die Leiter 4 in den Längsnuten 12 befestigen, sind entsprechende Löcher vorgesehen. Die Herstellung dieser radialen Kühlkanäle durch die Leiter 4 ist sehr arbeitsaufwändig.

### Darstellung der Erfindung

Es ist daher eine Aufgabe der vorliegenden Erfindung, einen Rotor zur Verfügung zu stellen, bei welchem die Herstellung der Kühlkanäle weniger aufwändig ist.

Diese Aufgabe wird durch einen Rotor für eine dynamoelektrische Maschine mit den Merkmalen des Patentanspruchs 1 gelöst, wobei in dessen zylindrischem Läuferkörper eine Vielzahl von Längsnuten verläuft, in welchen eine Erregerwicklung angeordnet ist, wobei pro Längsnut mehrere Leiter übereinander in unterschiedlichen Leiterebenen angeordnet sind.

Dabei ist erfindungsgemäß vorgesehen, dass die Erregerwicklung aus isolierten Leitern besteht, wobei in jeder Längsnut pro Leiterebene zumindest zwei Leiter parallel nebeneinander und mit einem Abstand zueinander angeordnet sind, sodass mehrere übereinander angeordnete Leiterpaare zumindest einen radial verlaufenden Kühlkanal bilden.

Damit kann zur Herstellung der Kühlkanäle in den Längsnuten die Herstellung von Leitern mit Löchern und von Isolationseinlagen mit Löchern entfallen, was die Herstellung des Rotors wesentlich vereinfacht. Es können volle Leiter ohne Löcher verwendet werden, die Isolationseinlagen entfallen ganz.

Jede Windung einer Spule der Erregerwicklung besteht somit etwa aus zwei parallelen Leitern oder Drähten.

Die Leiterisolation der isolierten Leiter kann eine Lackschicht oder eine Gewebeummantelung sein.

In einer Ausführungsform der Erfindung ist vorgesehen, dass der Abstand zwischen parallelen Leitern in einer Längsnut durch isolierende Distanzeinlagen hergestellt wird, wobei die Distanzeinlagen in axialer Richtung voneinander beabstandet sind, sodass die Abstände zwischen den Distanzeinlagen radial verlaufende Kühlkanäle bilden.

Die Distanzeinlagen können etwa aus einem Isolierstoff gebildet sein. Die Distanzeinlagen können beispielsweise im Wesentlichen rechteckige Platten aus einem Isolierstoff sein. Welcher Isolierstoff verwendet wird, hängt von den gewünschten oder geforderten Eigenschaften des Rotors ab, etwa ob eine Imprägnierung der Distanzeinlagen stattfinden soll und gegebenenfalls welches Imprägniermittel verwendet wird.

Über das Verhältnis der gemeinsamen Länge aller Distanzeinlagen einer Lage zur Länge der Längsnut kann keine allgemeine Angabe gemacht werden, weil dies von den Eigenschaften der dynamoelektrischen Maschine bzw. des Rotors abhängt: einerseits sollte die gemeinsame Länge der Distanzeinlagen möglichst klein sein (also in axialer Richtung ein möglichst großer Abstand zwischen den einzelnen Distanzeinlagen einer Lage sein), damit ausreichend große Kühlkanäle gebildet werden können und ausreichend Kühlluft durch die radialen Luftkanäle strömen kann, die sich in axialer Richtung gesehen zwischen den Distanzeinlagen befinden. Andererseits muss die mechanische Stabilität der Erregerwicklung sichergestellt sein, wobei lange axiale Abstände zwischen den Distanzeinlagen sich auf die Stabilität negativ auswirken. Insofern sollte die gemeinsame Länge der Distanzeinlagen möglichst groß sein (also in axialer Richtung ein möglichst kleiner Abstand zwischen den einzelnen Distanzeinlagen einer Lage sein).

In der Regel werden im Läuferkörper axiale Kanäle für Kühlluft vorgesehen sein, von denen jeweils mehrere radiale Kanäle abzweigen, die sich durch die Längsnuten (zwischen den Distanzeinlagen) fortsetzen.

Der Kühlungseffekt mit dem erfindungsgemäßen Rotor ist vergleichbar mit dem Kühlungseffekt bei direkter Kühlung der blanken Leiter.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
- Fig. 1: einen Längsschnitt durch einen Rotor gemäß dem Stand der Technik,
- Fig. 2: einen Querschnitt durch eine Längsnut eines Rotors aus Fig. 1 entlang A-A,
- Fig. 3: eine Detailansicht aus Fig. 2,
- Fig. 4: einen Querschnitt durch eine Längsnut (mit radialem Kanal zur Kühlung) eines Rotors aus Fig. 1 entlang B-B,
- Fig. 5: eine Draufsicht auf einen Leiter aus Fig. 1,
- Fig. 6: einen Längsschnitt durch einen erfindungsgemäßen Rotor,
- Fig. 7: einen Querschnitt durch eine Längsnut eines Rotors aus Fig. 6 entlang A-A,
- Fig. 8: eine Detailansicht aus Fig. 7,
- Fig. 9: einen Querschnitt durch eine Längsnut (mit radialem Kanal zur Kühlung) eines Rotors aus Fig. 6 entlang B-B.

### Ausführung der Erfindung

Fig. 1 zeigt einen Längsschnitt durch einen Rotor gemäß dem Stand der Technik. Wie bereits eingangs erläutert, besteht hier die Erregerwicklung aus blanken Leitern 4 ohne Isolierung, wobei ein Leiter 4 die gesamte Breite der Längsnut einnimmt. In radialer Richtung wird die Isolation zwischen den Leitern 4 mit Einlagen aus Isolationsstoff, sogenannten Isolationseinlagen 5, hergestellt. Die Hauptisolation 6 gegen das Nuteisen bilden Nutkästen aus Isolationsstoff.

Die Kühlung der Erregerwicklung wird mit Kühlluft 8 erreicht. Die Kühlluft 8 strömt durch axiale Kanäle 13 in den Läuferkörper 1 und durch davon abzweigende radiale Kanäle 14, die sich durch die Längsnuten 12 fortsetzen, zu den Leitern 4.

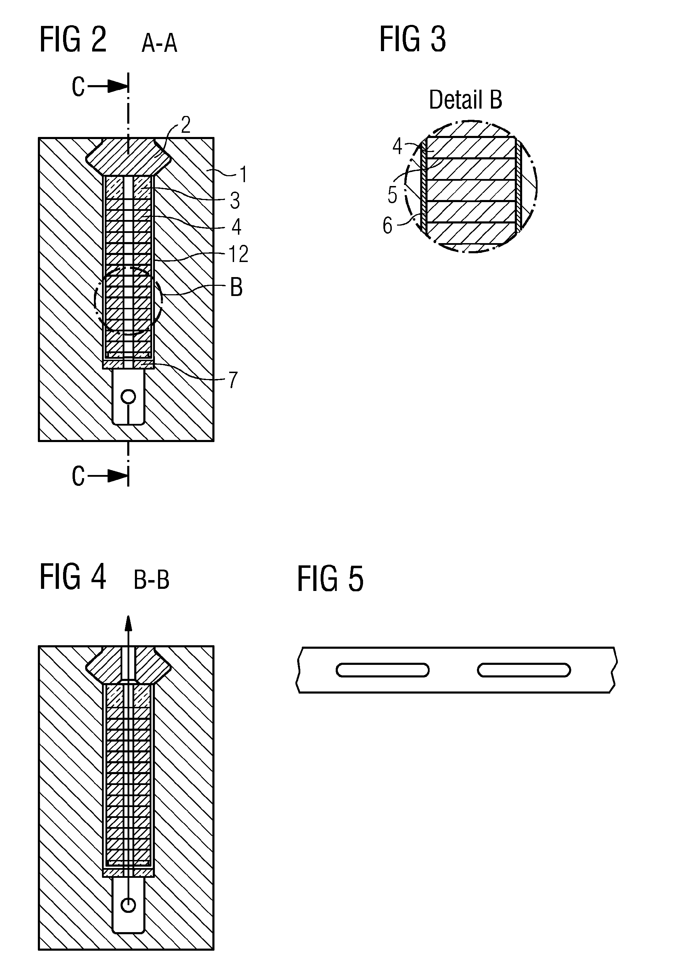

Diese weisen Löcher auf, wie in Fig. 5 zu sehen ist, sodass sich durch die Löcher in übereinander angeordneten Leitern die radialen Kanäle 14 fortsetzen. Auch in den Isolationseinlagen 5 und in den Keilen 2, welche die Leiter 4 in den Längsnuten 12 befestigen, sind entsprechende Löcher vorgesehen.

Der Keil 2 zum Verschließen der Längsnut 12 weist pro radialem Kanal 14 mehrere - hier vier - Düsen 15 zum Abführen der Kühlluft auf.

In Fig. 2 ist ein Querschnitt durch eine Längsnut 12 des Rotors aus Fig. 1 entlang A-A dargestellt, also ein Schnitt durch einen Bereich der übereinander angeordneten Leiter 4, der keine Löcher und damit keinen radialen Kanal 14 umfasst.

Die Anordnung von Leiter 4, Isolationseinlage 5 und Hauptisolation 6 ist in Fig. 3 genauer erkennbar.

In Fig. 4 ist der Querschnitt durch eine Längsnut mit radialem Kanal zur Kühlung dargestellt, nämlich als Schnitt entlang B-B aus Fig. 1. Hier sind also die deckungsgleich übereinander angeordneten Löcher in den Leitern 4 zu erkennen.

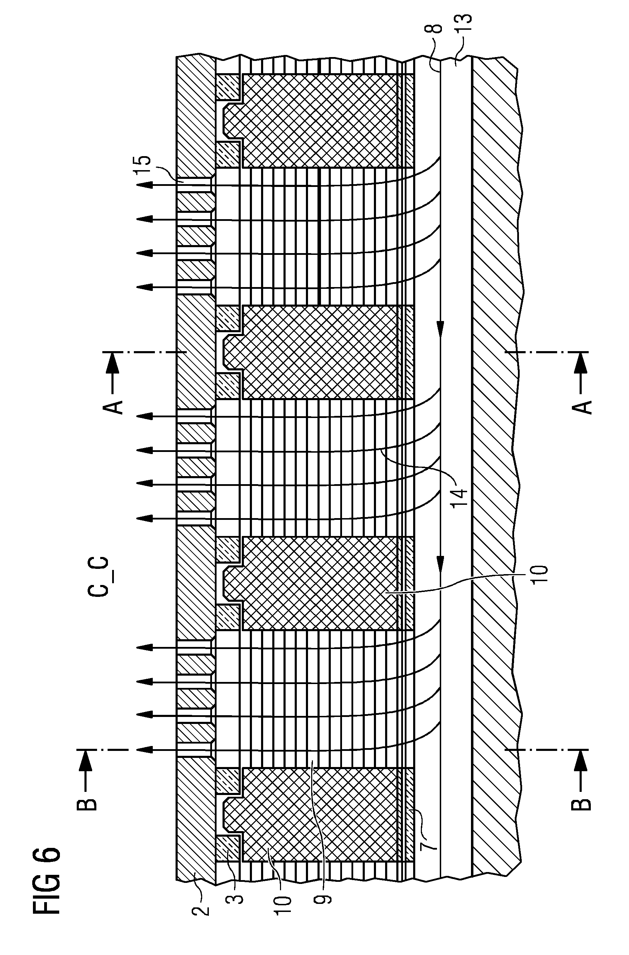

Fig. 6 zeigt einen Längsschnitt durch einen erfindungsgemäßen Rotor, und zwar mittig durch eine Längsnut 12. Es sind pro Längsnut 12 jeweils zwei parallele isolierte Leiter 9 ohne Löcher mit Abstand zueinander nebeneinander angeordnet. In Fig. 6 sieht man daher nur einen der beiden Stapel aus Leitern 9 und die zwischen den Stapeln angeordneten Distanzeinlagen 10.

Der gegenseitige Abstand der Distanzeinlagen 10 ist in axialer Richtung (von links nach rechts in Fig. 6) größer als deren Breite. Somit ist die Breite aller radialer Kanäle 14 zusammen größer als die Breite aller Distanzeinlagen 10.

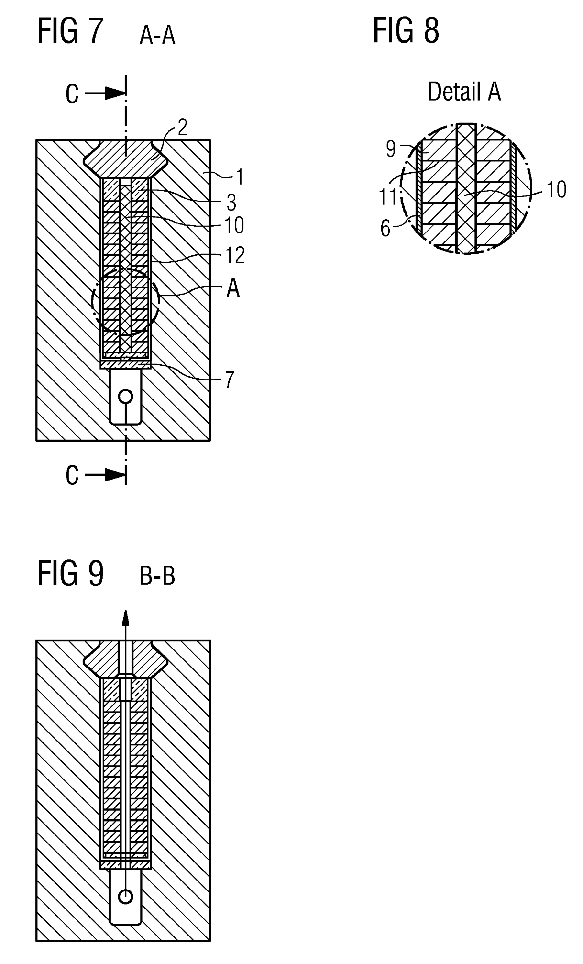

Zwischen den Leitern 9 sind - neben der am Leiter 9 direkt aufgebrachten Leiterisolation 11 (welche in Fig. 8 gut erkennbar ist) - keine Isolationseinlagen mehr vorgesehen. Die Leiterisolation 11 ist hier als Gewebeummantelung ausgeführt.

Der Keil 2 zum Verschließen der Längsnut 12, die Isolation 3 unter dem Keil 2, die Hauptisolation 5 und die Bodenisolation 7 sind wie in Fig. 1 ausgeführt.

In den Fig. 7 bis 9 ist die gegenseitige Anordnung der Leiterpaare, einmal mit und einmal ohne Distanzeinlage 10, erkennbar. Der gegenseitige Abstand der beiden Leiter 9 einer Leiterebene entspricht der Breite der Löcher in Leiter 4 aus Fig. 5 gemäß dem Stand der Technik.

Die Kühlluft 8 strömt durch die axialen Kanäle 13 unter den Längsnuten 12, durch die Löcher im Nutboden (deren Länge in axialer Richtung dem jeweiligen Abstand zwischen den Distanzeinlagen 10 entspricht), durch entsprechende Löcher in der Bodenisolation 7, durch den Raum zwischen den parallelen Leitern 9, durch die entsprechenden Löcher in der Isolation 3 unter dem Keil 2 und durch die Düsen 15 im Keil 2 in den Luftspalt zwischen Rotor und Stator.

### Bezugszeichenliste:

- 1: Läuferkörper
- 2: Keil
- 3: Isolation unter Keil 2
- 4: Leiter mit Löchern
- 5: Isolationseinlage
- 6: Hauptisolation
- 7: Bodenisolation
- 8: Kühlluft
- 9: isolierter Leiter
- 10: Distanzeinlage
- 11: Leiterisolation
- 12: Längsnut
- 13: axialer Kanal für Kühlluft
- 14: radialer Kanal für Kühlluft
- 15: Düsen

## Patentansprüche

1. Rotor für eine dynamoelektrische Maschine, in dessen zylindrischem Läuferkörper (1) eine Vielzahl von Längsnuten (12) verläuft, in welchen eine Erregerwicklung angeordnet ist, wobei pro Längsnut (12) mehrere Leiter (4, 9) übereinander in unterschiedlichen Leiterebenen angeordnet sind, **dadurch gekennzeichnet, dass** die Erregerwicklung aus isolierten Leitern (9) besteht, wobei in jeder Längsnut (12) pro Leiterebene zumindest zwei Leiter (9) parallel nebeneinander und mit einem Abstand zueinander angeordnet sind, sodass mehrere übereinander angeordnete Leiterpaare zumindest einen radial verlaufenden Kühlkanal (14) bilden.

2. Rotor nach Anspruch 1, **dadurch gekennzeichnet, dass** die Leiterisolation (11) der isolierten Leiter (9) eine Lackschicht oder eine Gewebeummantelung ist.

3. Rotor nach Anspruch 1 oder 2, **dadurch gekennzeichnet, dass** der Abstand zwischen parallelen Leitern (9) in einer Längsnut (12) durch isolierende Distanzeinlagen (10) hergestellt wird, wobei die Distanzeinlagen (10) in axialer Richtung voneinander beabstandet sind, sodass die Abstände zwischen den Distanzeinlagen radial verlaufende Kühlkanäle (14) bilden.

4. Rotor nach Anspruch 3, **dadurch gekennzeichnet, dass** die Distanzeinlagen (10) aus einem Isolierstoff gebildet sind.

5. Rotor nach einem der Ansprüche 1 bis 4, **dadurch gekennzeichnet, dass** im Läuferkörper (1) axiale Kanäle (13) für Kühlluft vorgesehen sind, von denen jeweils mehrere radiale Kanäle (14) abzweigen, die sich durch die Längsnuten (12) fortsetzen.
